# EUROPÄISCHE PATENTSCHRIFT

(11) **EP 0 330 854 B1**
(45) Veröffentlichungstag und Bekanntmachung des Hinweises auf die Patenterteilung: **20.10.1993**
(21) Anmeldenummer: 89101858.2
(22) Anmeldetag: 03.02.1989
(51) Int. Cl.: H01C 10/32, H01C 10/30, G06K 11/06

(54) **Drehpotentiometer**
Rotary potentiometer
Potentiomètre rotatif

(30) Priorität: 04.03.1988 DE 3807005
(43) Veröffentlichungstag der Anmeldung: 06.09.1989
(73) Patentinhaber: Preh-Werke GmbH & Co. KG, 97616 Bad Neustadt (DE)
(72) Erfinder: Berthold, Gottfried, Dr. rer. nat., D-7410 Reutlingen (DE); Limpert, Rudolf, Dipl.-Math., D-8740 Salz (DE); Fehr, Friedhard, D-8731 Lauter (DE)

(56) Entgegenhaltungen:
- EP-A- 0 157 666
- EP-A- 0 185 443
- DE-A- 3 243 712

## Beschreibung

Die Erfindung betrifft ein Drehpotentiometer mit einer teilzylindrischen Widerstandsbahn, an deren beiden zur Zylinderachse parallelen Rändern wenigstens ein Elektrodenpaar angeordnet ist, über das die Widerstandsbahn an Spannung legbar ist, und mit einem an der Widerstandsbahn anliegenden Schleifer, der an einem um die Zylinderachse drehbaren Stellglied gehalten ist.

Ein derartiges Drehpotentiometer ist in der EP 0 157 666 A1 beschrieben. Mit diesem Drehpotentiometer läßt sich eine Winkelstellung eines drehbaren Bauteils, beispielsweise eines Maschinenelements erfassen. Dieses wird hierfür mit dem Stellglied gekoppelt. Soll auch eine lineare Bewegung des Bauteils erfaßt werden, dann ist hierfür nicht nur ein Schiebepotentiometer, sondern auch eine aufwendige Kupplungsmechanik notwendig, die die Drehbewegung nur auf das Drehpotentiometer und die lineare Bewegung auf das Schiebepotentiometer überträgt.

In der DE-AS 23 17 144 ist eine Vorrichtung zum Verstellen mehrerer Widerstände mittels eines durch eine Kugel schwenkbar gelagerten Verstellhebels beschrieben. Es lassen sich damit zwar Verschiebungen des Verstellhebels in xy-Richtung, jedoch nicht Drehungen um seine Längsachse erfassen. Eine ähnliche Vorrichtung ist in der DE-OS 21 62 853 beschrieben.

Zur Erfassung von Dreh- und Schiebebewegungen sind berührungslos arbeitende Anordnungen, beispielsweise elektrodynamische Systeme, wie Differentialtransformatoren, induktive oder kapazitive Einrichtungen oder auch pneumatische Staudruckanordnungen bekannt. Bei solchen Anordnungen ist jedoch der Beschaltungsaufwand hoch. Darüber hinaus sind die erreichbaren Signalspannungen oder Signalströme im Verhältnis zur Versorgungsspannung oder Versorgungsstrom sehr klein. Dies macht solche Anordnungen gegen Störungen empfindlich.

Aufgabe der Erfindung ist es, ein Drehpotentiometer der eingangs genannten Art so weiterzubilden, daß das Stellglied auch lineare Bewegungen durchführen und erfassen kann.

Erfindungsgemäß ist obige Aufgabe bei einem Drehpotentiometer der eingangs genannten Art dadurch gelöst, daß das Stellglied um einen Hub axial zur Zylinderachse relativ zur Widerstandsbahn verschieblich ist, daß die axiale Breite der Widerstandsbahn dem Hub des Stellgliedes entspricht, daß an den beiden in Umfangsrichtung des Zylinders verlaufenden Rändern der Widerstandsbahn wenigstens ein weiteres Elektrodenpaar vorgesehen ist und daß die beiden Elektrodenpaare wechselweise an Spannung legbar sind.

Das Stellglied kann somit Bewegungen mit drehender und linearer Bewegungskomponente erfassen bzw. ausführen. Der Schleifer nimmt dabei an der Widerstandsbahn eine entsprechende Stellung ein. Durch das wechselweise Schalten des Elektrodenpaars der zur Zylinderachse parallelen Ränder und des Elektrodenpaars der in Umfangsrichtung verlaufenden Ränder wird im Takt des Spannungswechsels der der Drehbewegung und der der Linearbewegung entsprechende Widerstand wirksam.

Der Aufbau ist kompakt, da der Aufwand an beweglichen Bauteilen gering ist.

Ein weiterer Vorteil besteht darin, daß die an der Widerstandsbahn abgetastete Spannung in ihrem Maximalwert im wesentlichen gleich der angelegten Versorgungsspannung ist und die Zwischenwerte einen entsprechenden Teil der Versorgungsspannung darstellen. Im Vergleich zu berührungsfreien Einrichtungen sind also hohe Spannungen erreichbar, so daß die Anordnung vergleichsweise unempfindlich gegen Störungen ist.

In bevorzugter Ausgestaltung der Erfindung ist der Widerstand auf der gesamten Widerstandsbahn homogen. Es ist damit die abgegriffene Spannung direkt proportional der jeweiligen Verschiebestellung und der jeweiligen Drehstellung.

In Ausgestaltung der Erfindung ist die Widerstandsbahn am Innenumfang eines Gehäuseteils vorgesehen und das Stellglied ist in dessen Zentrum gelagert. Dadurch steht für die Widerstandsbahn eine große Fläche des Potentiometers zur Verfügung. Es ist jedoch auch möglich, die Widerstandsbahn auf einem inneren zylindrischen Teil vorzusehen und als Stellglied einen diesen umschließenden Mantel zu gestalten. Es ist nicht notwendig, daß von dem Bauteil, dessen Bewegung erfaßt werden soll, das Stellglied bewegt wird. Ebensogut kann das Bauteil die Widerstandsbahn relativ zum Stellglied bewegen.

Um Linearitätsverfälschungen über den gesamten Dreh- bzw. Hubbereich zu vermeiden, sind an den Rändern der Widerstandsbahn jeweils mehrere Elektrodenpaare angeordnet, wobei die Elektroden im Vergleich zur Länge der Ränder kurz sind. Die Elektroden sind mittels Dioden entkoppelt. Eine derartige Anordnung von Elektrodenpaaren ist in der DE-OS 32 43 712 beschrieben.

Die Herstellung einer geeigneten Widerstandsbahn in Umkehrlaminiertechnik ergibt sich aus der DE-OS 33 22 382.

Das beschriebene Drehpotentiometer kann beispielsweise bei Betätigungseinrichtungen eingesetzt werden, die Dreh- und Schiebebewegungen ausführen und bei denen eine Lagerückmeldung erwünscht ist. Solche Betätigungseinrichtungen sind beispielsweise Steuerungshandgriffe, Ventilbetätigungseinrichtungen, Verriegelungssysteme oder Steuereinheiten für Schaltgetriebe.

Weitere vorteilhafte Ausgestaltungen der Erfindung ergeben sich aus der folgenden Beschreibung.

In der Zeichnung zeigen:

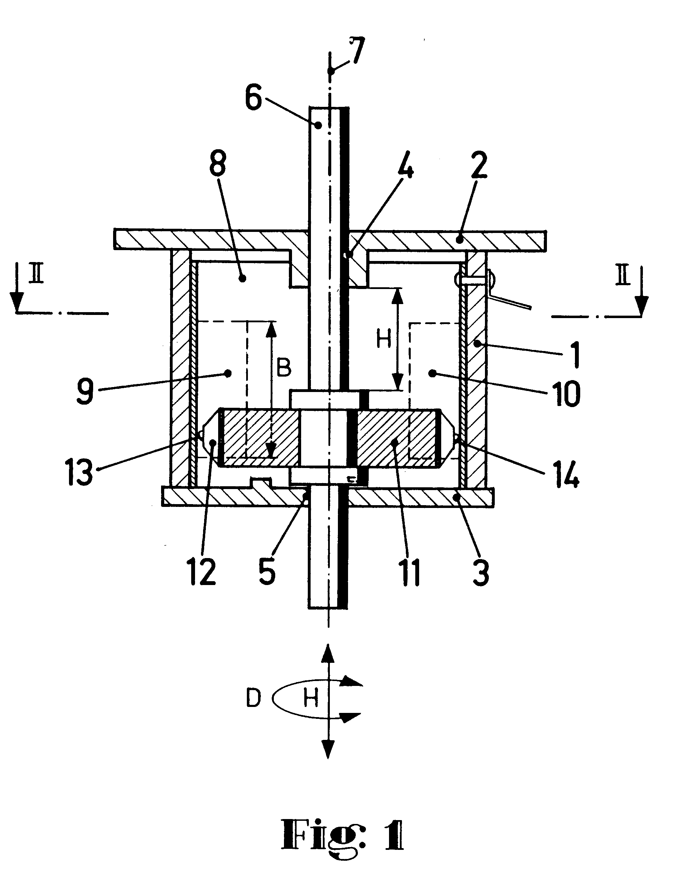

- Figur 1: einen Längsschnitt eines Potentiometers,

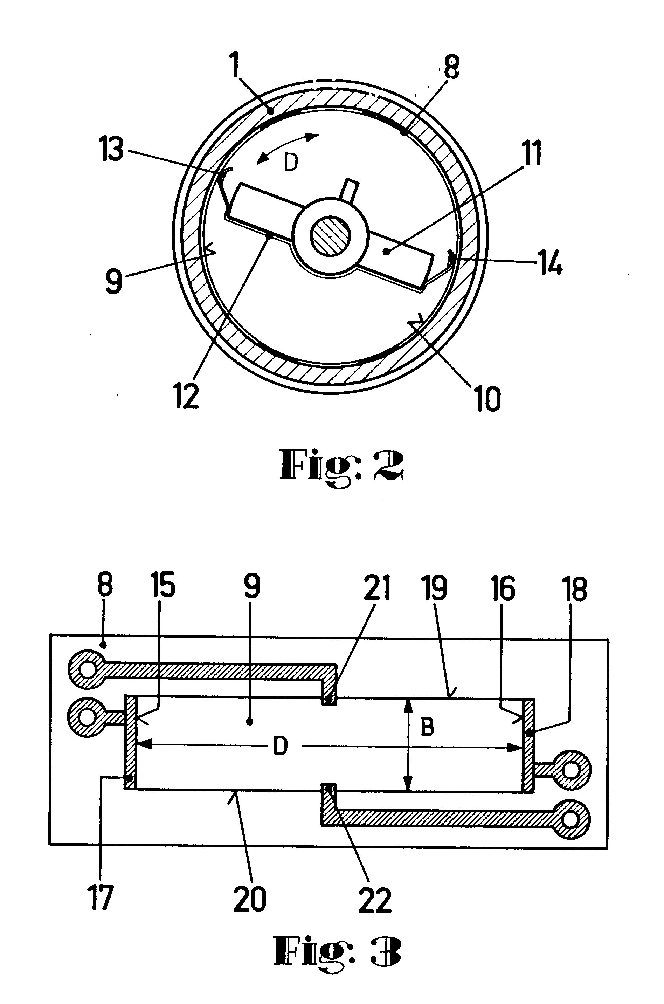

- Figur 2: einen Schnitt längs der Linie II-II nach Figur 1,
- Figur 3: schematisch eine Widerstandsbahn in abgewickelter Lage,
- Figur 4: einen Träger mit Widerstandsbahn und Abgriffsfeld in abgewickelter Lage
und
- Figur 5: einen Schaltplan.

Ein zylindrisches, rohrförmiges Gehäuseteil (1) ist mit zwei Deckeln (2, 3) abgeschlossen. An den Deckeln (2, 3) sind Lagerstellen (4, 5) für eine Welle (6) angeordnet. Die Welle (6) erstreckt sich konzentrisch zur Zylinderachse (7) des Gehäuseteils (1).

Innen an dem Gehäuseteil (1) ist eine Trägerfolie (8) angeordnet, die eine Widerstandsbahn (9) und ein Abgriffsfeld (10) trägt. Die Widerbahn (9) erstreckt sich über einen Winkel kleiner als 180°. Sie weist eine Breite (B) auf. Das Abgriffsfeld (10) liegt am Innenumfang des Gehäuseteils (1) der Widerstandsbahn (9) gegenüber und weist die gleiche Flächengröße wie diese auf.

An der Welle (6) ist ein Stellglied (11) gehalten, das einen Schleifer (12) trägt. Eine Schleiferzunge (13) des Schleifers (12) liegt an der Widerstandsbahn (9) an. Eine Schleiferzunge (14) des Schleifers (12) liegt an dem Abgriffsfeld (10) an. Die Welle (6) bzw. der Schleifer (12) sind nicht nur um die Zylinderachse (7) drehbar. Sie sind auch axial um einen Hub (H) verschieblich. Der Hub (H) ist im wesentlichen gleich der Breite (B) der Widerstandsbahn (9).

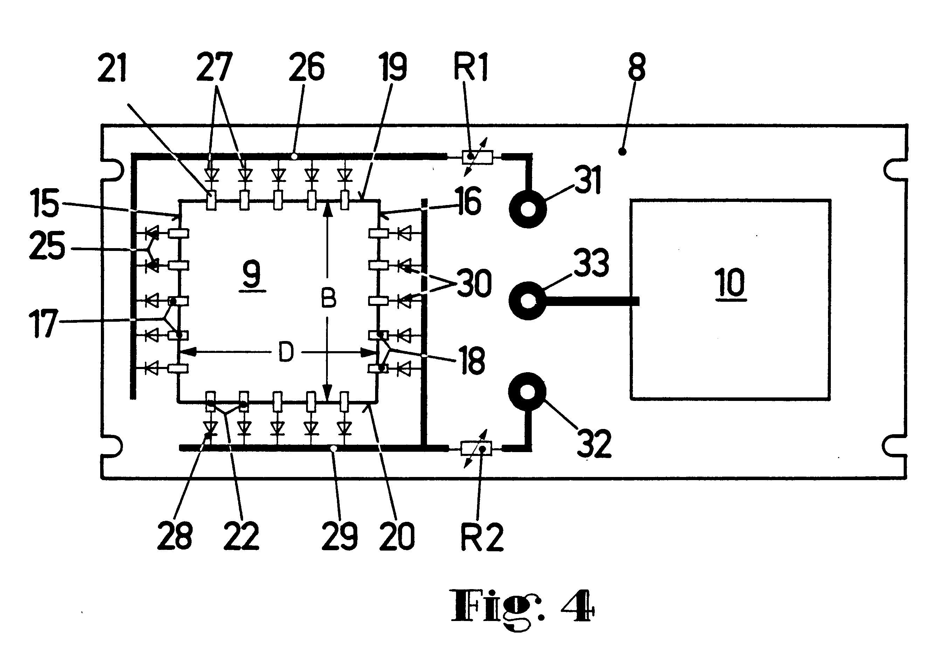

Bei der in Figur 3 gezeigten Ausführung sind an den zur Zylinderachse (7) parallelen Rändern (15, 16) je eine Elektrode (17, 18) angeordnet. Die Elektroden (17, 18) bilden ein Elektrodenpaar. Sie erstrecken sich im wesentlichen durchgehend über den betreffenden Rand (15 bzw. 16).

An den beiden in Umfangrichtung des zylindrischen Gehäuses (1) verlaufenden Rändern (19, 20) der Widerstandsbahn (9) sind Elektroden (21, 22) vorgesehen, die ein weiteres Elektrodenpaar bilden. Die Elektroden (21, 22) sind im Vergleich zur Länge der Ränder (19, 20) punktförmig.

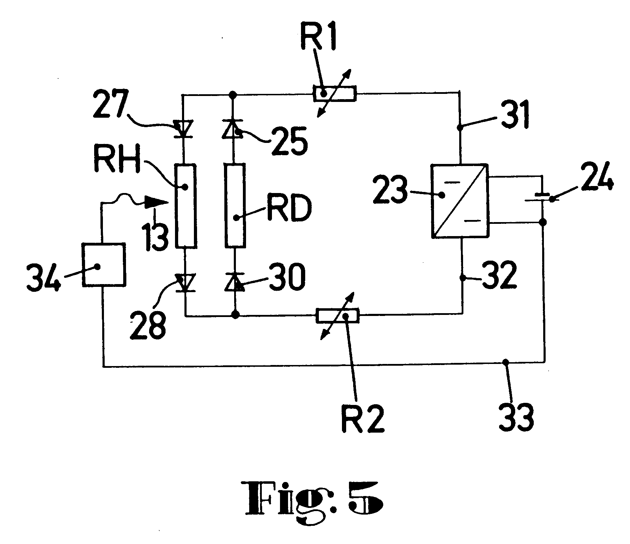

Die Elektrodenpaare (16, 17; 21, 22) werden über einen Umschalter (23) (vgl. Figur 5) wechselweise an eine Gleichspannungsquelle (24) angeschlossen, die eine Versorgungsspannung liefert. Bei der Anordnung nach Figur 3 ist zwar in der Richtung der Drehbewegung (D) eine hinreichende Linearität des Widerstandsverlaufs gewährleistet. In Richtung des Hubes (H) jedoch ist der Widerstandsverlauf von der jeweiligen Drehstellung abhängig. Eine Möglichkeit dies zu vermeiden, ist bei der Widerstandsbahn (9) nach Figur 4 dargestellt.

Die Widerstandsbahn (9) nach Figur 3 ist rechteckig. Ihre längere Erstreckung ist für die Drehbewegung (D) vorgesehen. Es wäre jedoch auch möglich, dem Hub (H) die längere Erstreckung zuzuordnen.

Beim Ausführungsbeispiel nach Figur 4 ist die Widerstandsbahn (9) quadratisch. An jedem der Ränder (15, 16, 19, 20) ist eine Mehrzahl von Elektroden (17, 18, 21, 22) vorgesehen. Die Elektroden sind im Vergleich zur Länge der Ränder (15, 16) kurz. Die Kontaktfläche, mit der das Schleiferende (13) auf der Widerstandsbahn (9) aufliegt, ist im Vergleich zum Abstand der Elektroden klein. Die Elektroden weisen die gleichen Abstände voneinander auf.

Die Elektroden (17) sind über Dioden (25) an eine Leiterbahn (26) der Trägerfolie (8) angeschlossen. Die Elektroden (21) sind über Dioden (27) an die Leiterbahn (26) angeschlossen. Die Elektroden (22) sind über Dioden (28) an eine weitere Leiterbahn (29) angeschlossen. Die Elektroden (18) sind über Dioden (30) an die Leiterbahn (29) angeschlossen. Die Dioden (27) und die Dioden (28) einerseits sowie die Dioden (30) und die Dioden (25) andererseits sind gleichsinnig gepolt, jedoch so, daß die Dioden (25) gegensinnig gepolt sind bezogen auf die benachbarten Dioden (27) der gleichen Leiterbahn (26).

Zwischen der Leiterbahn (26) und seiner Anschlußstelle (31) ist ein Widerstand (R1) und zwischen der Leiterbahn (29) und deren Anschlußstelle (32) ist ein Widerstand (R2) angeordnet. Die Widerstände (R1, R2) kompensieren den Temperaturgang der Dioden.

Die quadratische Gestalt der Widerstandsbahn (9) hat den Vorteil, daß an allen Elektroden gleiche Dioden und an beiden Leiterbahnen gleiche Widerstände (R1, R2) verwendet werden können, wobei sich bei der Drehbewegung und bei der Hubbewegung gleiche Spannungsverhältnisse ergeben.

Günstig ist bei der Anordnung nach Figur 4 auch, daß neben den beiden Anschlußstellen (31, 32) nur eine weitere Anschlußstelle (33) für das Abgriffsfeld (10) vorgesehen sein muß.

In Figur 5 ist RH der in Hubrichtung wirkende Widerstand der Widerstandsbahn (9). RD ist der in Drehrichtung wirksame Widerstand der Widerstandsbahn (9). An die Anschlußstelle (33) ist eine Auswerteschaltung (34) angeschlossen, die entsprechend des Taktes der Umschalteinrichtung (23) wechselweise die am Widerstand (RH) und am Widerstand (RD) abgegriffene Spannung erfaßt, welche der Verschiebestellung des Schleifers (12) in Hubrichtung bzw. der Verdrehung des Schleifers (12) in Drehrichtung entspricht.

Die Funktionsweise des beschriebenen Dreh-Schiebepotentiometers ist im wesentlichen folgende:
Wird die Welle (6) mit einem Bauteil gekoppelt, das sich einerseits um eine Achse dreht und andererseits in Achsrichtung verschiebt, dann führt der Schleifer (12) auf der Widerstandsbahn (9) eine entsprechende Bewegung aus. Die Auswerteschaltung (34) erfaßt dabei der jeweiligen Drehstellung und der jeweiligen Verschiebestellung entsprechende Spannungen. Um eine exakte Auswertung zu ermöglichen, ist der Takt, mit dem der Umschalter (23) wechselweise die Versorgungsspannung an die Elektrodenpaare (17, 18 bzw. 21, 22) legt, schneller als die Geschwindigkeit der Bewegung.

Bei anderen Ausführungsbeispielen ist es auch möglich, die Widerstandsbahn (9) nahezu bis 360° zu erstrecken. Das Abgriffsfeld (10) kann dann in Achsrichtung des Gehäuseteils (1) neben der Widerstandsbahn (9) angeordnet sein. Es ist jedoch auch möglich, anstelle des Abgriffsfeldes (10) die vom Schleifer (12) erfaßte Spannung z.B. mittels eines weiteren Schleifers am Stellglied (11) oder der Welle (6) abzugreifen oder mittels einer Spiralfeder an das Gehäuse (1) zu führen.

Zur Kompensation der temperaturabhängigen Diodendurchlaßspannung kann anstelle der temperaturabhängigen Widerstände auch der - bekannte - Temperaturkoeffizient der Diodendurchlaßspannung in der Auswerteschaltung (34) kompensiert werden. Die Temperaturkompensation kann auch dadurch erreicht werden, daß der Spannungsabfall an den Dioden über eine zusätzliche Meßleitung auf die Auswerteschaltung (34) geschaltet wird.

Bei rechteckigen, nichtquadratischen, homogenen Widerstandsbahnen (9) ist der Spannungsabfall an den der Kompensation dienenden Widerständen (R1, R2) an sich unterschiedlich, so daß sie die temperaturabhängige Diodendurchlaßspannung nur ungenügend kompensieren. Um dies auszugleichen, können entweder die beiden Widerstände (R1, R2) entsprechend unterschiedliche Werte aufweisen oder es kann der diese durchfließende Strom unterschiedlich gewählt werden, indem eine unterschiedliche Versorgungsspannung angelegt wird.

## Patentansprüche

1. Drehpotentiometer mit einer teilzylindrischen Widerstandsbahn (9), an deren beiden zur Zylinderachse (7) parallelen Rändern (15,16) wenigstens ein Elektrodenpaar (17,18) angeordnet ist, über das die Widerstandsbahn (9) an Spannung legbar ist und mit einem an der Widerstandsbahn (9) anliegenden Schleifer (12), der an einem um die Zylinderachse (7) drehbaren Stellglied (11) gehalten ist,
dadurch gekennzeichnet,
daß das Stellglied (11) um einen Hub (H) axial zur Zylinderachse (7) relativ zur Widerstandsbahn (9) verschieblich ist, daß die axiale Breite (B) der Widerstandsbahn (9) dem Hub (H) des Stellgliedes (11) entspricht, daß an den beiden in Umfangsrichtung des Zylinders verlaufenden Rändern (19, 20) der Widerstandsbahn (9) wenigstens ein weiteres Elektrodenpaar (21, 22) vorgesehen ist und daß die beiden Elektrodenpaare (17, 18; 21, 22) wechselweise an Spannung legbar sind.

2. Drehpotentiometer nach Anspruch 1,
dadurch gekennzeichnet,
daß die Widerstandsbahn (9) homogen ist.

3. Drehpotentiometer nach Anspruch 1 oder 2,
dadurch gekennzeichnet,
daß die Widerstandsbahn (9) am Innenumfang eines Gehäuseteils (1) vorgesehen und das Stellglied (11) in dessen Zentrum gelagert ist.

4. Drehpotentiometer nach einem der vorhergehenden Ansprüche,
dadurch gekennzeichnet,
daß die Widerstandsbahn (9) sich über weniger als 180° erstreckt und dem Schleifer (12) ein Abgriffsfeld (10) zugeordnet ist, das die gleiche Fläche wie die Widerstandsbahn (9) aufweist und diametral zur Widerstandsbahn (9) angeordnet ist.

5. Drehpotentiometer nach einem der vorhergehenden Ansprüche,
dadurch gekennzeichnet,
daß an den Rändern (15, 16, 19, 20) der Widerstandsbahn (9) jeweils mehrere Elektrodenpaare (17, 18; 21, 22) angeordnet sind, wobei die Elektroden im Vergleich zur Länge der Ränder (15, 16, 19, 20) kurz sind, und daß die Elektroden (17, 18, 21, 22) mittels Dioden (25, 27, 28, 30) entkoppelt sind.

6. Drehpotentiometer nach Anspruch 5,
dadurch gekennzeichnet,
daß zur Kompensation der temperaturabhängigen Durchlaßspannung der Dioden (25, 27, 28, 30) Widerstände (R1, R2) mit positivem Temperaturkoeffizienten vorgesehen sind.

7. Drehpotentiometer nach Anspruch 5 oder 6,
dadurch gekennzeichnet,
daß die Kontaktfläche, mit der der Schleifer (12) auf der Widerstandsbahn (9) aufliegt, kleiner als der Abstand zwischen zwei benachbarten Elektroden (17, 18, 21, 22) ist.

8. Drehpotentiometer nach einem der vorhergehenden Ansprüche,
dadurch gekennzeichnet,
daß die Widerstandsbahn (9) in der Abwicklung quadratisch ist.

## Claims

1. Rotary potentiometer having a partially cylindrical resistance path (9) on whose two edges (15, 16) parallel to the cylinder axis (7) at least one pair of electrodes (17, 18) is arranged, by means of which the resistance path (9) can have voltage applied, and having a slider (12) lying on the resistance path (9), which slider is held on an adjustment member (11) rotatable about the cylinder axis (7),
characterised in that
the adjustment member (11) can be moved relatively to the resistance path (9) by a stroke (H) axially to the cylinder axis (7), in that the axial width (B) of the resistance path (9) corresponds to the stroke (H) of the adjustment member (11), in that at both the edges (19, 20) of the resistance path (9) extending in the circumferential direction of the cylinder at least one further pair of electrodes (21, 22) is provided, and in that the two pairs of electrodes (17, 18; 21, 22) can have voltage applied alternately to them.

2. Rotary potentiometer according to claim 1,
characterised in that
the resistance path (9) is homogenous.

3. Rotary potentiometer according to claim 1 or 2,
characterised in that
the resistance path (9) is provided on the inner circumference of a housing part (1) and the adjustment member (11) is mounted in its centre.

4. Rotary potentiometer according to one of the preceding claims,
characterised in that
the resistance path (9) extends over less than 180° and associated with the slider (12) is a pick-up panel (10) which has the same surface area as the resistance path (9) and is arranged diametrically to the resistance path (9).

5. Rotary potentiometer according to one of the preceding claims,
characterised in that
at the edges (15, 16, 19, 20) of the resistance path (9) there are respectively arranged several pairs of electrodes (17, 18; 21, 22), the electrodes being short in comparison with the length of the edges (15, 16, 19, 20), and in that the electrodes (17, 18, 21, 22) are decoupled by means of diodes (25, 27, 28, 30).

6. Rotary potentiometer according to claim 5,
characterised in that
for compensation of the temperature-dependent forward voltage of the diodes (25, 27, 28, 30) resistances (R1, R2) are provided with positive temperature coefficients.

7. Rotary potentiometer according to claim 5 or 6,
characterised in that
the contact surface with which the slider (12) lies on the resistance path (9) is smaller than the distance between two adjacent electrodes (17, 18, 21, 22).

8. Rotary potentiometer according to one of the preceding claims,
characterised in that
the resistance path (9) is square, seen in development.

## Revendications

1. Potentiomètre rotatif comportant une piste de résistance (9) partiellement cylindrique, sur les deux bords (15, 16) parallèles à l'axe géométrique (7) du cylindre de laquelle est disposée au moins une paire d'électrodes (17, 18) par l'intermédiaire desquelles une tension peut être appliquée à la piste de résistance (9), ainsi qu'un frotteur (12) appliqué sur la piste de résistance (9), lequel est maintenu sur un organe de positionnement (11) susceptible d'effectuer une rotation sur l'axe géométrique du cylindre (7), caractérisé par le fait qu'il est possible de déplacer l'organe de positionnement (11) par rapport à la piste de résistance (9) sur une course en translation (H) axiale par rapport à l'axe géométrique (7) du cylindre, que la largeur de la piste de résistance (9) dans le sens axial correspond à la course (H) de l'organe de positionnement (11), que sur les deux bords (19, 20) de la piste de résistance (9) qui s'étendent dans le sens périphérique du cylindre, on prévoit au moins une autre paire d'électrodes (21, 22) et que l'on peut appliquer alternativement une tension (électrique) sur les deux paires d'électrodes (17, 18 ; 21, 22).

2. Potentiomètre rotatif selon la revendication 1, caractérisé par le fait que la piste de résistance (9) est homogène.

3. Potentiomètre rotatif selon la revendication 1 ou 2, caractérisé par le fait que la piste de résistance (9) est prévue sur la périphérie intérieure d'une pièce formant boîtier (1) et que l'organe de positionnement est monté au centre de celle-ci.

4. Potentiomètre rotatif selon l'une des revendications précédentes, caractérisé par le fait que la piste de résistance s'étend sur moins de 180° et qu'une surface (10) de saisie est affectée au frotteur (12), laquelle surface (10) de saisie présente la même surface que la piste de résistance (9) et est disposée diamétralement par rapport à la piste de résistance (9).

5. Potentiomètre rotatif selon l'une des revendications précédentes, caractérisé par le fait que sur chacun des bords (15, 16, 19, 20) de la piste de résistance (9) sont disposées plusieurs paires d'électrodes (17, 18 ; 21, 22), les électrodes étant courtes comparativement à la longueur des bords (15, 16, 19, 20), et que les électrodes (17, 18, 21, 22) sont désaccouplés au moyen de diodes (25, 27, 28, 30).

6. Potentiomètre rotatif selon la revendication 5, caractérisé par le fait qu'en vue de la compensation de la tension de passage, dépendant de la température, dans les diodes (25, 27, 28, 30), on prévoit des résistances (R1, R2) dotées d'un coefficient de température positif.

7. Potentiomètre rotatif selon la revendication 5 ou 6, caractérisé par le fait que la surface de contact par laquelle le frotteur (12) s'applique sur la piste de résistance (9) est plus petite que la distance séparant deux électrodes voisines (17, 18, 21, 22).

8. Potentiomètre rotatif selon l'une des revendications précédentes, caractérisé par le fait que la piste de résistance (9) est carrée, lorsqu'elle est développée.
